# EUROPÄISCHE PATENTSCHRIFT

(11) **EP 3 197 323 B1**
(45) Veröffentlichungstag und Bekanntmachung des Hinweises auf die Patenterteilung: **07.11.2018**
(21) Anmeldenummer: 14789136.0
(22) Anmeldetag: 29.07.2014
(51) Int. Cl.: A47D 9/02, A63H 33/00, B62B 9/22, A47D 9/04

(54) **VORRICHTUNG ZUR ERZEUGUNG EINER WIPPBEWEGUNG AN AUFLAGEN FÜR BABYS**
DEVICE FOR GENERATING A ROCKING MOVEMENT IN SUPPORTS FOR BABIES
DISPOSITIF POUR GÉNÉRER UN MOUVEMENT DE BASCULE AU NIVEAU DE SUPPORTS POUR BÉBÉS

(43) Veröffentlichungstag der Anmeldung: 02.08.2017
(73) Patentinhaber: Luginin, Valeriy, 13599 Berlin (DE)
(72) Erfinder: Luginin, Valeriy, 13599 Berlin (DE)
(74) Vertreter: Limbeck, Achim
(86) Internationale Anmeldenummer: PCT/DE2014/100274
(87) Internationale Veröffentlichungsnummer: WO 2016/015692

(56) Entgegenhaltungen:
- DE-U1-202011 003 639
- US-A1- 2011 204 689

## Beschreibung

### Technisches Gebiet

Die vorliegende Erfindung betrifft eine Vorrichtung zur Erzeugung einer Wippbewegung an Auflagen für Babys, umfassend ein an einem Sockel angeordnetes Gestell mit einem Tragarm sowie ein Zugmittel, welches zur Aufhängung der Auflage ausgelegt ist. Als Auflagen für Babys seien nachstehend sämtliche Einrichtungen verstanden, welche zur dauerhaften Aufnahme von Babys üblicherweise vorgesehen sind, wie bspw. Babyliegen, Kinderbetten, Kinderwagen, etc., oder die zur Auflage derartiger Aufnahmen geeignet sind.

### Stand der Technik

Es sind aus dem Stand der Technik Babyschaukeln oder Babywippen bekannt, welche zur Erzeugung einer Schaukelbewegung manuell angestoßen werden können. Durch die Einleitung einer manuellen Schwingung bzw. eines manuellen Schwingungsimpulses an diesen Babyschaukeln oder Babywippen wird die vorgesehene Auflage in eine Schaukelbewegung versetzt und schwingt hin und her bzw. auf und ab.

Ferner sind aus dem Stand der Technik Babywippen bekannt, die aus einer Auflage bestehen, die zur Platzierung zum Beispiel von Kinderwagen, Kinderbetten oder dergleichen auf der Babywippe derart ausgebildet und mit einem Schwingungsmechanismus versehen sind, welche das Mobiliar hin und her schaukeln.

Der Nachteil dieser Babywippen besteht in erster Linie darin, dass sie in ihrer Handhabung unpraktikabel sind. Zudem sind diese Babywippen technisch aufwendig gestaltet und mit hohen Anschaffungskosten verbunden.

Aus der DE 2011 003 639 U1 ist eine Vorrichtung zur Erzeugung einer Wippbewegung an Auflagen für Babys bekannt, die ein an einem Sockel angeordnetes Gestell mit einem Tragarm sowie ein Zugmittel umfasst, welches zur Aufhängung der Auflage ausgelegt ist. Das Antriebselement ist dabei zur Herbeiführung einer Schwingung oder eines Schwingimpulses vorgesehen, an dem eine das Zugmittel auf- und abschwingende Einrichtung vorgesehen ist, die so ausgebildet ist, dass durch die Einleitung der Schwingung bzw. des Schwingungsimpulses die Auflage in eine kontinuierliche oder intermittierende Wippbewegung versetzt wird, wobei das Antriebselement ein Elektromotor oder ein hydraulisch oder pneumatisch betriebener Motor oder ein über ein Federwerk angetriebener Motor oder ein magnetischer Antrieb ist. Nachteilig bei dieser Vorrichtung ist die mangelhafte Steuerung und Ausrichtung der Schwingung der Erinrichtung.

### Darstellung der Erfindung

Der vorliegenden Erfindung liegt die Aufgabe zu Grunde, eine Vorrichtung zur automatisierten Erzeugung einer Wippbewegung an Auflagen für Babys zu schaffen, welche die vorgenannten Nachteile ausräumt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Erfindungsgemäß ist eine Vorrichtung der eingangs genannten Art dadurch gekennzeichnet, dass ein Antriebselement zur Herbeiführung einer Schwingung oder eines Schwingimpulses vorgesehen ist, wobei an dem Antriebselement eine das Zugmittel auf- und abschwingende Einrichtung vorgesehen ist, die so ausgebildet ist, dass durch die Einleitung der Schwingung bzw. des Schwingungsimpulses die Auflage in eine kontinuierliche oder intermittierende Wippbewegung versetzt wird.

Das Antriebselement ist erfindungsgemäß ein Elektromotor oder ein hydraulisch oder pneumatisch betriebener Motor oder ein über ein Federwerk angetriebener Motor oder ein magnetischer Antrieb. Darüber hinaus kommen selbstverständlich auch sämtliche weiteren, denkbaren Antriebe in Betracht, welche geeignet sind, eine Schwingung oder einen Schwingimpulse in Gang zu setzen oder aufrecht zu erhalten.

Das Zugmittel ist üblicherweise als Seil, Kette, textiles Band oder textile Rundschlinge ausgestaltet, wobei sich die vorliegende Erfindung auf sämtliche Arten und Ausführungsformen von Zugmitteln bezieht.

Das Zugmittel ist zwischen dem Antriebselement und der gezogenen Auflage angeordnet. Das Antriebselement bildet daher die Zugeinrichtung, die Auflage bildet entsprechend das Zugobjekt. Die an dem Antriebselement erfindungsgemäß vorgesehene und das Zugmittel auf- und abschwingende Einrichtung zur Einleitung der Schwingung bzw. des Schwingungsimpulses der Auflage in eine kontinuierliche oder intermittierende Wippbewegung ist dabei entweder Teil des Antriebselements selbst oder als ein selbständiges Bauteil an dem Antriebselement angeordnet.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

### In der Zeichnung zeigt

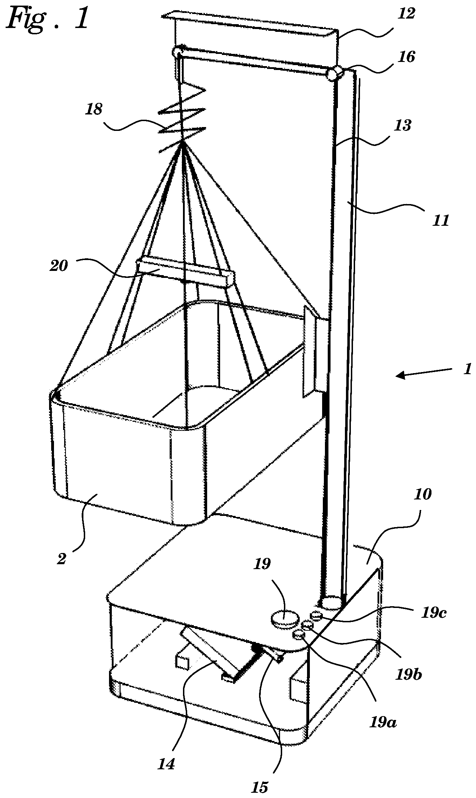

Fig.1 die erfindungsgemäße Vorrichtung in einer bevorzugten Ausführungsform in perspektivischer Ansicht.

### Ausführung der Erfindung

Wie aus Fig.1 ersichtlich, umfasst die Vorrichtung 1 zur Erzeugung einer Wippbewegung an Auflagen 2 für Babys ein an einem Sockel 10 angeordnetes Gestell 11 mit einem Tragarm 12 sowie ein Zugmittel 13, welches zur Aufhängung der Auflage 2 ausgelegt ist. Der Sockel ist vorzugsweise als Hohlkörper ausgebildet, welcher das Antriebselement 14 aufnimmt. Das Zugmittel 13, welches an der auf- und abschwingenden Einrichtung 15 angeordnet ist, wird in dieser vorteilhaften Ausführungsform der Erfindung über Umlenkeinrichtungen 16 (vorzugsweise Umlenkrollen) zur Aufhängung 17 der Auflage 2 geführt.

Durch Einschalten des Antriebselements und Einleitung der Schwingung bzw. des Schwingungsimpulses durch die Einrichtung 15 wird die Auflage 2 in eine kontinuierliche oder intermittierende Wippbewegung versetzt. Zur Vermeidung eines ruckartigen Einsetzens der Wippbewegung ist vorteilhaft ein elastisches Aufhängungselement 18 vorgesehen, welches bspw. aus einer Feder besteht. Zudem kann aber auch (zusätzlich) durch die Ausführung eines elastischen oder federnden Zugmittels ein ruckartiges Einsetzen der Wippbewegung verhindert werden.

Die Auflage 2 besteht in der in Fig.1 dargestellten Ausführung aus einem korbartigen Behältnis 2 für Babys.

Die Einrichtung 15 besteht in der vorliegenden Ausführungsform aus einem stabförmigen Zugelement 15, welches an dem rotierenden Antriebselement 14 angeordnet ist und welches das Zugmittel 13 durch Rotation, Teilrotation oder durch eine auf- und abschwingende Bewegung im Wechsel nach oben hin freigibt und wieder nach unten zieht.

An dem Sockel ist vorzugsweise eine Steuerung 19 der Vorrichtung vorgesehen.

Mittels des Schalters 19a wird die Schwingungsgeschwindigkeit/-frequenz des Antriebselements 14 eingestellt.

Mittels des Schalters 19b wird die Anlaufgeschwindigkeit des Antriebselements 14 geregelt.

Mittels des Schalters 19c wird die Schwingungsamplitude eingestellt. Hierzu ist ein weiteres motorisches Antriebselement 30 vorgesehen, mittels dem die Ausrichtung der Einrichtung 15 und/oder des Antriebselements 14 eingestellt werden kann. Hierbei ist sowohl eine Änderung in der winkeligen Ausrichtung oder eine Änderung von Abständen oder Längenausrichtungen bei der Einrichtung 15 oder dem Antriebselement 14 möglich, welche bewirkt, dass sich die Schwingungsamplitude an dem Zugmittel 13 und mithin an der Auflage 2 ändert.

Die an dem Zugmittel 13 oder zwischen dem Zugmittel und der Auflage 2 angeordnete Feder kann austauschbar und für unterschiedliche Gewichte ausgelegt sein.

Oberhalb der Auflage 12 ist vorzugsweise mindestens ein akustisches Aufnahme- und/oder Ausgabeelement 20 (bspw. ein mp3-Player mit mindestens einem Lautsprecher und Mikrofon) vorgesehen. Dies ermöglicht es, bspw. Wiegenlieder aufzunehmen und wiederzugeben. Hierzu kann ggf. auch ein USB/SD-Card Anschluss vorhanden sein. In einer weiteren bevorzugten Ausführungsform der Erfindung ist eine Videokamera vorgesehen, mittels dem das Baby auch in der Ferne (bspw. auf dem Smartphone oder dem Tablet) beobachtet werden kann. In Verbindung mit der Tonausgabe über Lautsprecher kann darüber hinaus auch eine Kommunikation mit dem Baby stattfinden. Hierzu ist vorzugsweise eine Sende- und Empfangseinrichtung in Form eines WLAN-, Bluetooth- oder eines anderen, kabellosen Funknetzwerkes an der Vorrichtung 1 vorgesehen.

In einer weiteren vorteilhaften Ausführung sind Sensoren vorgesehen, welche bestimmte Bewegungen, Zustände oder Geräusche (Äußerungen) des Babys ermitteln und vorprogrammierte Aktionen automatisch einleiten. Solche Aktionen können die akustische Wiedergabe von Liedern, die Einleitung einer Wippbewegung oder eine Alarmierung sein, welches bspw. mittels eines Smartphones erfolgt. Die Funktionen können ein- und ausgeschaltet werden.

Darüber hinaus ist es denkbar, an der Vorrichtung Solarzellen zur Gewinnung der Energie für den Antrieb sowie die Versorgung der genannten Einrichtungen vorzusehen, um die Vorrichtung auch autark sowie im Freien verwenden zu können.

Hierzu kann es weiterhin vorteilhaft sein, die Vorrichtung mit einer Batterie (vorzugsweise mit einem Akku) auszustatten.

Die erfindungsgemäße Vorrichtung beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Vorrichtung
- 2: Auflage
- 10: Sockel
- 11: Gestell
- 12: Tragarm
- 13: Zugmittel
- 14: Antriebselement 14
- 15: auf- und abschwingende Einrichtung
- 16: Umlenkeinrichtungen
- 17: Aufhängung
- 18: elastisches Aufhängungselement
- 19: Steuerung
- 19a,19b,19c: Schalter
- 20: Aufnahme- / Ausgabeelement
- 30: weiteres motorisches Antriebselements

## Patentansprüche

1. Vorrichtung (1) zur Erzeugung einer Wippbewegung an Auflagen (2) für Babys, umfassend ein an einem Sockel (10) angeordnetes Gestell (11) mit einem Tragarm (12) sowie ein Zugmittel (13), welches zur Aufhängung der Auflage (2) ausgelegt ist, wobei ein Antriebselement (14) zur Herbeiführung einer Schwingung oder eines Schwingimpulses vorgesehen ist, an dem eine das Zugmittel (13) auf- und abschwingende Einrichtung (15) vorgesehen ist, die so ausgebildet ist, dass durch die Einleitung der Schwingung bzw. des Schwingungsimpulses die Auflage (2) in eine kontinuierliche oder intermittierende Wippbewegung versetzt wird, wobei das Antriebselement (14) ein Elektromotor oder ein hydraulisch oder pneumatisch betriebener Motor oder ein über ein Federwerk angetriebener Motor oder ein magnetischer Antrieb ist,
**dadurch gekennzeichnet, dass**
die Schwingungsamplitude einstellbar und ein weiteres motorisches Antriebselement (30) vorgesehen ist, mittels dem die Ausrichtung der Einrichtung (15) und/oder des Antriebselements (14) eingestellt werden kann.

2. Vorrichtung (1) nach Anspruch 1,
**dadurch gekennzeichnet,**
**dass** der Sockel (10) als Hohlkörper ausgebildet ist, welcher das Antriebselement (14) aufnimmt.

3. Vorrichtung (1) nach den Ansprüchen 1 und 2,
**dadurch gekennzeichnet,**
**dass** zur Vermeidung eines ruckartigen Einsetzens der Wippbewegung ein elastisches Aufhängungselement (18) vorgesehen ist.

4. Vorrichtung (1) nach einem der vorangegangenen Ansprüche,
**dadurch gekennzeichnet,**
**dass** ein elastisches oder federndes Zugmittel (13) ein ruckartiges Einsetzen der Wippbewegung verhindert.

5. Vorrichtung (1) nach einem der vorangegangenen Ansprüche,
**dadurch gekennzeichnet,**
**dass** die Einrichtung (15) aus einem stabförmigen Zugelement (15) besteht, welches an dem rotierenden Antriebselement (14) angeordnet ist und welches das Zugmittel (13) durch Rotation, Teilrotation oder durch eine auf- und abschwingende Bewegung im Wechsel nach oben hin freigibt und wieder nach unten zieht.

6. Vorrichtung (1) nach einem der vorangegangenen Ansprüche,
**dadurch gekennzeichnet,**
**dass** die Schwingungsgeschwindigkeit/-frequenz des Antriebselements (14) einstellbar ist.

7. Vorrichtung (1) nach einem der vorangegangenen Ansprüche,
**dadurch gekennzeichnet,**
**dass** die Anlaufgeschwindigkeit des Antriebselements (14) regelbar ist.

8. Vorrichtung (1) nach einem der vorangegangenen Ansprüche,
**dadurch gekennzeichnet,**
**dass** mindestens ein akustisches Aufnahme- und/oder Ausgabeelement (20) vorgesehen ist.

9. Vorrichtung (1) nach einem der vorangegangenen Ansprüche,
**dadurch gekennzeichnet,**
**dass** eine Sende- und Empfangseinrichtung in Form eines WLAN-, Bluetooth- oder eines anderen, kabellosen Funknetzwerkes an der Vorrichtung (1) vorgesehen ist.

10. Vorrichtung (1) nach einem der vorangegangenen Ansprüche,
**dadurch gekennzeichnet,**
**dass** Sensoren vorgesehen sind, welche bestimmte Bewegungen, Zustände oder Geräusche des Babys ermitteln und vorprogrammierte Aktionen automatisch über eine Steuerung einleiten.

11. Vorrichtung (1) nach einem der vorangegangenen Ansprüche,
**dadurch gekennzeichnet,**
**dass** Solarzellen zur Gewinnung der Energie für den Antrieb sowie die Versorgung der genannten Einrichtungen vorgesehen sind.

12. Vorrichtung (1) nach einem der vorangegangenen Ansprüche,
**dadurch gekennzeichnet,**
**dass** sie mit einer Batterie, vorzugsweise einem Akku, ausgestattet ist.

## Claims

1. Device (1) for generating a rocker movement on pads (2) for babies, including a frame (11) on a pedestal (10) with a mounting arm (12), as well as a tension element (13), which is designed to suspend the pad (2), whereby a drive element (14) to the generation of a oscillation or a oscillating pulse is provided, where a the tension element (13) is fitted with an up and down swinging device (15), which is so designed that through the introduction of the oscillation or the oscillation pulse, the pad (2) is placed in a continuous or intermittent rocking movement, whereby the drive element (14) is an electric motor or a hydraulically or pneumatically operated motor or a spring-driven motor or a magnetic drive,
**characterized in that**
the oscillation amplitude is adjustable and a further motor drive element (30) is provided by means of which the alignment of the device (15) and / or of the drive element (14) can be adjusted.

2. Device (1) according to claim 1,
**characterized in that**
the base (10) is designed as a hollow body which receives the drive element (14).

3. Device (1) according to claims 1 and 2,
**characterized in that**
**in that** an elastic suspension element (18) is provided to avoid jerky starting of the rocking motion.

4. Device (1) according to one of the preceding claims,
**characterized in that**
an elastic or resilient traction means (13) prevents a jerky starting of the rocking motion.

5. Device (1) according to one of the preceding claims,
**characterized in that**
the device (15) consists of a rod-shaped tension element (15), which is arranged on a rotating drive element (14) and alternately rotates the traction means (13) by rotation, partial rotation or by an up and down swinging motion releasing upwards and pulling down again.

6. Device (1) according to one of the preceding claims,
**characterized in that**
the oscillation speed / frequency of the drive element (14) is adjustable.

7. Device (1) according to one of the preceding claims,
**characterized in that**
the start-up speed of the drive element (14) is adjustable.

8. Device (1) according to one of the preceding claims,
**characterized in that**
at least one acoustic recording and / or output element (20) is provided.

9. Device (1) according to one of the preceding claims,
**characterized in that**
a transmitting and receiving device in the form of a WLAN, Bluetooth or another wireless radio network is provided on the device (1).

10. Device (1) according to one of the preceding claims,
**characterized in that**
sensors which detect certain movements, states, or sounds from the baby and automatically initiate programmed actions of a control system are provided.

11. Device (1) according to one of the preceding claims,
**characterized in that**
solar cells are provided for generating the energy for the drive and the supply of said device.

12. Device (1) according to one of the preceding claims,
**characterized in that**
it is fitted with a battery, preferably rechargeable battery.

## Revendications

1. Dispositif (1) pour générer un mouvement de balancement sur des supports (2) pour bébés, comprenant un cadre (11) avec un bras de support (12) disposé sur une base (10) et un moyen de traction (13) qui est conçu pour suspendre le support (2), dans lequel un élément d'entraînement (14) est prévu pour induire une vibration ou une impulsion de vibration, sur lequel est prévu un dispositif (15) qui oscille vers le haut et vers le bas le moyen de traction (13) et est conçu de telle manière que, par le déclenchement de la vibration ou d'une impulsion d'oscillation, l'élément d'entraînement (14) est prévu. le support (2) est placé dans un mouvement de basculement continu ou intermittent, l'élément d'entraînement (14) étant un moteur électrique ou un moteur à commande hydraulique ou pneumatique ou un moteur ou un entraînement magnétique entraîné par un mécanisme à ressort,
se **caractérise par** cela,
que l'amplitude de vibration est réglable et un autre élément d'entraînement de moteur (30) est prévu, au moyen duquel l'alignement de l'appareil (15) et/ou de l'élément d'entraînement (14) peut être ajusté.

2. Dispositif (1) selon l'exigence 1,
**se caractérisant par** cela,
que la base (10) est conçue comme un corps creux qui accueille l'élément d'entraînement (14).

3. Dispositif (1) selon les exigences 1 et 2,
**se caractérisant par** cela,
qu'un élément de suspension élastique (18) est prévu pour éviter un début saccadé du mouvement de balancement.

4. Dispositif (1) selon l'une des exigences précédentes,
**se caractérisant par** cela,
en ce qu'un moyen de traction élastique ou à ressort (13) empêche la mise en place d'un mouvement de bascule vers l'arrière.

5. Dispositif (1) selon l'une des revendications précédentes,
**se caractérisant par** cela,
en ce que le dispositif (15) est constitué d'un élément de tension (15) en forme de tige qui est disposé sur un élément d'entraînement rotatif (14) et qui libère les moyens de tension (13) vers le haut et vers le bas par rotation, rotation partielle ou par un mouvement ascendant et descendant en alternance.

6. Dispositif (1) selon l'une des exigences précédentes,
**se caractérisant par** cela,
en ce que la vitesse / fréquence de vibration de l'élément d'entraînement (14) est réglable.

7. Dispositif (1) selon l'une des revendications précédentes,
**se caractérisant par** cela,
que la vitesse de démarrage de l'élément d'entraînement (14) est réglable.

8. Dispositif (1) selon l'une des exigences précédentes,
**se caractérisant par** cela,
en ce qu'au moins un élément d'enregistrement et/ou de sortie acoustique (20) est prévu.

9. Dispositif (1) selon l'une des exigences précédentes,
**se caractérisant par** cela,
qu'un dispositif d'émission et de réception sous la forme d'un réseau local sans fil, Bluetooth ou autre réseau radio sans fil est prévu sur le dispositif (1).

10. Dispositif (1) selon l'une des exigences précédentes,
**se caractérisant par** cela,
qu'il est pourvu de capteurs qui détectent certains mouvements, états ou bruits du bébé et déclenchent automatiquement des actions préprogrammées par l'intermédiaire d'un contrôleur.

11. Dispositif (1) selon l'une des exigences précédentes,
**se caractérisant par** cela,
que des cellules solaires sont prévues pour générer l'énergie pour l'entraînement et pour alimenter ledit dispositif.

12. Dispositif (1) selon l'une des exigences précédentes,
**se caractérisant par** cela,
qu'il est équipé d'une batterie, de préférence une batterie rechargeable.
